# EUROPEAN PATENT APPLICATION

(11) **EP 4 703 208 A1**
(43) Date of publication of application: **04.03.2026**
(21) Application number: 24797166.6
(22) Date of filing: 26.04.2024
(51) Int. Cl.: B60R 1/06, B60R 1/12

(54) **DOOR MIRROR FOR VEHICLE AND MANUFACTURING METHOD THEREFOR**

(30) Priority: 27.04.2023 JP 2023073785
(71) Applicant: Misato Industries Co., Ltd., Fujioka-shi, Gunma-ken 375-0024 (JP)
(72) Inventor: MATSUBARA, Tomoya, Ebina-shi, Kanagawa 243-0432 (JP); ONUKI, Ryo, Ebina-shi, Kanagawa 243-0432 (JP)
(74) Representative: Lewis Silkin LLP
(86) International application number: PCT/JP2024/016389
(87) International publication number: WO 2024/225421

(57) **Abstract**

To provide a technique that relates to a door mirror and/or a door mirror manufacturing method and allows incorporation of different types of lamps while suppressing an increase in cost. A door mirror for a vehicle includes a lamp attaching portion, a first lamp attached to the lamp attaching portion via a bracket, and a housing cover having an optical opening through which light emitted from the first lamp is transmitted. A second lamp different in lighting characteristics from the first lamp is attachable to the lamp attaching portion as an alternative to the first lamp. The bracket causes an optical axis of the first lamp while the first lamp is attached to the lamp attaching portion to be inclined in a direction different from a direction in which an optical axis of the second lamp is inclined when the second lamp is alternatively attached to the lamp attaching portion.

## Description

### TECHNICAL FIELD

The present disclosure relates to a door mirror for a vehicle and a method of manufacturing the same, and more specifically relates to a door mirror in which at least one lamp is incorporated and a method of manufacturing the same.

### BACKGROUND ART

PTL 1 discloses that a camera and a lamp are assembled in a housing of a side mirror for a vehicle. As illustrated in FIG. 2 of PTL 1, a camera 50 and a lamp 60 are fixed with a common screw B.

PTL 2 discloses that a lamp is incorporated into a door mirror to provide foot lighting when an occupant gets in and out of a vehicle.

PTL 3 discloses that a projection device that projects a decorative light design onto an outer surface of a vehicle is incorporated into the vehicle.

### CITATION LIST

### PATENT LITERATURE

PTL 1: Japanese Unexamined Patent Application Publication No. 2016-78559
PTL 2: Japanese Unexamined Patent Application Publication No. Hei 11-198717
PTL 3: United States Patent No. 7175321

### SUMMARY OF THE INVENTION

### PROBLEMS TO BE SOLVED BY THE INVENTION

In some cases, in order to install a lamp in a housing of a door mirror, a lamp attaching portion to which the lamp is attached is provided in a constituent part (e.g., a mirror housing, a housing cover, or another housing part) of the door mirror. However, there is not necessarily only one type of such lamp. Specifically, as an alternative to a lighting lamp for foot lighting, a projection lamp for projecting a logo may be attached to a door mirror for the same type of vehicle. Under such a situation, if a constituent part of the door mirror is formed or molded for each of the different types of lamps, an increase in manufacturing cost (e.g., an increase in die cost) is unavoidable.

As can be understood from the non-limiting example described above, the inventors of the present application have found a new task of providing a technique that relates to a door mirror and/or a method of manufacturing a door mirror and allows incorporation of different types of lamps while suppressing an increase in cost.

### MEANS FOR SOLVING THE PROBLEM

A first aspect of the present disclosure is a door mirror for a vehicle, the door mirror including: a lamp attaching portion; a first lamp that is attached to the lamp attaching portion via a bracket; and a housing cover that has an optical opening through which light emitted from the first lamp is transmitted, wherein a second lamp that is different in lighting characteristics from the first lamp is attachable to the lamp attaching portion as an alternative to the first lamp, and the bracket causes an optical axis of the first lamp while the first lamp is attached to the lamp attaching portion to be inclined in a direction different from a direction in which an optical axis of the second lamp is inclined when the second lamp is alternatively attached to the lamp attaching portion.

A second aspect of the present disclosure is the door mirror according to the first aspect, wherein the housing cover has a peripheral edge or a peripheral wall that defines an opening as the optical opening, and the bracket has at least one closing rib that protrudes toward the peripheral edge or the peripheral wall.

A third aspect of the present disclosure is the door mirror according to the second aspect, wherein the at least one closing rib has a height that is continuously or intermittently changed in a circumferential direction of the opening.

A fourth aspect of the present disclosure is the door mirror according to the third aspect, wherein the height of the at least one closing rib is set to be higher on an inner side in a vehicle width direction than on an outer side in the vehicle width direction.

A fifth aspect of the present disclosure is the door mirror according to any of the second to fourth aspects, wherein the first lamp includes a light source, a housing, and at least one lens that is supported by the housing and through which light emitted from the light source is transmitted, and the at least one closing rib is provided on an outer periphery of the at least one lens.

A sixth aspect of the present disclosure is the door mirror according to the fifth aspect, wherein the at least one closing rib extends along an entire circumference around an optical axis of the at least one lens.

A seventh aspect of the present disclosure is the door mirror according to the fifth or sixth aspect, wherein an outer convex lens portion of the at least one lens is visually recognizable from outside through the opening.

An eighth aspect of the present disclosure is the door mirror according to any of the second to seventh aspects in which the housing cover has the peripheral wall, wherein the peripheral wall has a height that is continuously or intermittently changed in a circumferential direction of the opening, and the at least one closing rib has a height that is changed in a manner complementary to a change in height of the peripheral wall.

A ninth aspect of the present disclosure is the door mirror according to any of the second to eighth aspects, wherein the bracket includes a cylindrical housing that receives the first lamp, the cylindrical housing has an inner end portion having an opening and an outer end portion on a side opposite to the inner end portion, and the outer end portion has at least one flange having the at least one closing rib.

A tenth aspect of the present disclosure is the door mirror according to any of the first to ninth aspects, wherein while the door mirror is attached to a vehicle, the bracket causes an optical axis of the first lamp while the first lamp is attached to the lamp attaching portion to be more inclined inward in a vehicle width direction than an optical axis of the second lamp when the second lamp is alternatively attached to the lamp attaching portion.

An eleventh aspect of the present disclosure is the door mirror according to any of the first to tenth aspects, wherein the first lamp is a projection device that projects a predetermined design or logo.

A twelfth aspect of the present disclosure is the door mirror according to any of the first to eleventh aspects, wherein the lamp attaching portion is provided in a mirror housing that defines a housing space together with the housing cover.

A thirteenth aspect of the present disclosure is a door mirror for a vehicle, the door mirror including: a lamp attaching portion; a first lamp that is attached to the lamp attaching portion via a bracket; and a housing cover that has an opening through which light emitted from the first lamp is transmitted, wherein the bracket has at least one closing rib that is located around the opening and protrudes toward the housing cover, and the at least one closing rib has a height that is changed in a circumferential direction of the opening.

A fourteenth aspect of the present disclosure is the door mirror according to the thirteenth aspect, wherein the housing cover has a peripheral wall that is formed to define the opening, the peripheral wall has a height that is continuously or intermittently changed in a circumferential direction of the opening, and a change in height of the closing rib is complementary to a change in height of the peripheral wall.

A fifteenth aspect of the present disclosure is the door mirror according to the thirteenth or fourteenth aspect, wherein the height of the at least one closing rib is set to be higher on an inner side in a vehicle width direction than on an outer side in the vehicle width direction.

A sixteenth aspect of the present disclosure is a method of manufacturing a door mirror for a vehicle, the method including: continuously forming, using a predetermined die device, a group of housing parts each of which has a lamp attaching portion; attaching a first lamp to a bracket to assemble a lamp unit; attaching the bracket of the lamp unit to the lamp attaching portion of a first housing part included in the group of housing parts continuously formed; and attaching a second lamp to the lamp attaching portion of a second housing part included in the group of housing parts continuously formed.

A seventeenth aspect of the present disclosure is the method of manufacturing a door mirror for a vehicle according to the sixteenth aspect, wherein the bracket causes an optical axis of the first lamp while the first lamp is attached to the lamp attaching portion via the bracket to be inclined in a direction different from a direction in which an optical axis of the second lamp is inclined when the second lamp is alternatively attached to the lamp attaching portion.

An eighteenth aspect of the present disclosure is the method of manufacturing a door mirror for a vehicle according to the sixteenth or seventeenth aspect, the method further including continuously forming, using a predetermined die device, a group of housing covers each of which has a common opening for the first and second lamps.

### EFFECTS OF THE INVENTION

An aspect of the present disclosure can provide a technique that allows incorporation of different types of lamps while suppressing an increase in cost.

### BRIEF DESCRIPTION OF THE DRAWINGS

[FIG. 1] FIG. 1 is a front view of a door mirror according to an aspect of the present disclosure, and also shows, by dotted lines, a camera and a lamp that are incorporated in the door mirror.
[FIG. 2] FIG. 2 is a rear view of the door mirror, and also shows, by dotted lines, the camera and the lamp that are incorporated in the door mirror.
[FIG. 3] FIG. 3 is a bottom view of the door mirror, and a lower cover of the door mirror has an opening for the camera and an opening for the lamp that are individually formed.
[FIG. 4] FIG. 4 is a schematic rear view of the lower cover that defines a housing space together with a mirror housing.
[FIG. 5] FIG. 5 is a schematic perspective view of the lower cover.
[FIG. 6] FIG. 6 is a schematic perspective view of the lower cover, and shows a state in which the camera is attached to the lower cover.
[FIG. 7] FIG. 7 is a front view showing a state in which a lighting lamp is attached to a lamp attaching portion of the mirror housing.
[FIG. 8] FIG. 8 is a front view showing a state in which a projection lamp is attached to the lamp attaching portion of the mirror housing.
[FIG. 9] FIG. 9 is a schematic diagram mainly showing a position of the lighting lamp with respect to the opening of the lower cover.
[FIG. 10] FIG. 10 is a schematic perspective view of the lighting lamp.
[FIG. 11] FIG. 11 is a schematic diagram mainly showing a position of the projection lamp with respect to the opening of the lower cover.
[FIG. 12] FIG. 12 is a schematic side view of the projection lamp.
[FIG. 13] FIG. 13 is a schematic bottom view of the projection lamp.
[FIG. 14] FIG. 14 is a schematic chart for a method of manufacturing a door mirror.

### MODE FOR CARRYING OUT THE INVENTION

Non-limiting embodiments and features of the present invention will be described below with reference to the drawings. Those skilled in the art can combine embodiments and/or features without excessive description, and can understand the synergistic effects of the combination. Duplicate descriptions of the embodiments will be omitted in principle. The reference drawings are mainly intended to describe the invention, and are simplified for convenience of illustration. The features are effective not only for the door mirror and the method of manufacturing a door mirror that are disclosed in the present specification, but should be understood as universal features applicable to various other door mirrors and methods of manufacturing a door mirror that are not disclosed in the present specification.

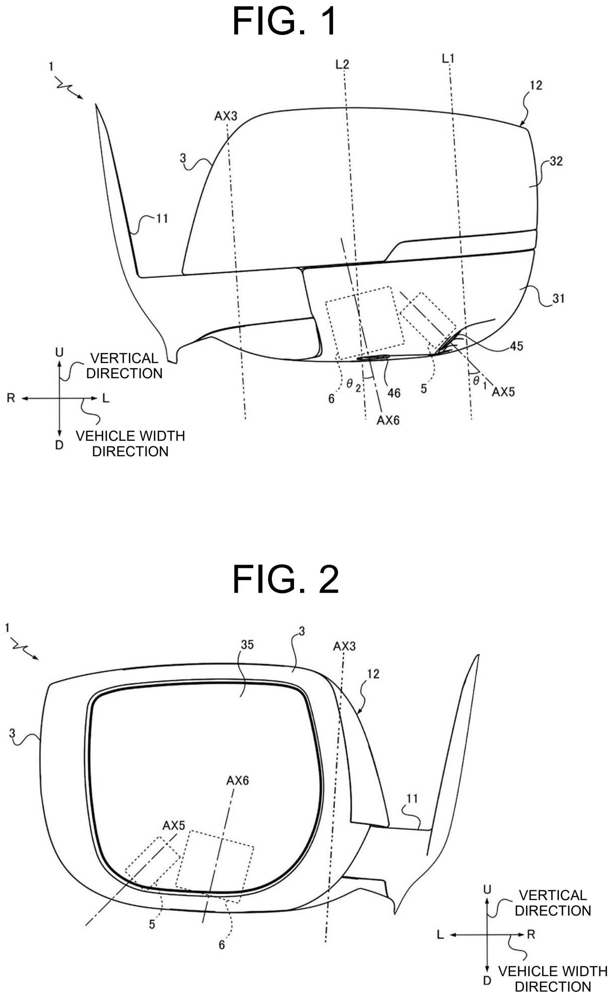

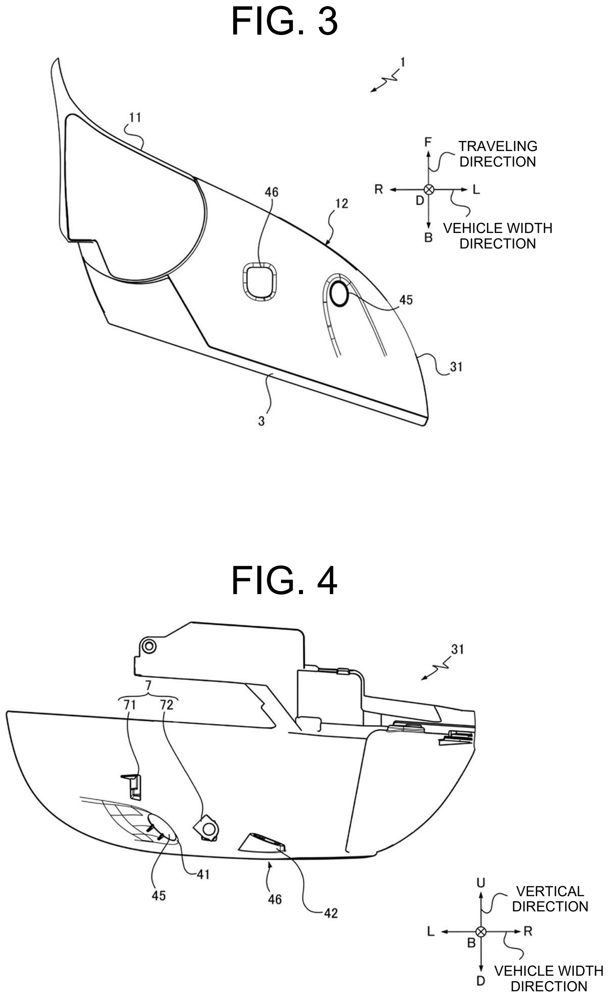

Description will be provided with reference to FIGs. 1 to 3. FIG. 1 is a front view of a door mirror 1, and also shows, by dotted lines, a camera 5 and a lamp 6 that are incorporated in the door mirror 1. FIG. 2 is a rear view of the door mirror, and also shows, by dotted lines, the camera 5 and the lamp 6 that are incorporated in the door mirror. FIG. 3 is a bottom view of the door mirror, and a lower cover 31 of the door mirror has an opening for the camera 5 and an opening for the lamp 6 that are individually formed. For the door mirror 1, with respect to a straight line connecting a first position outside the door mirror 1 with a second position inside the door mirror 1, a third position closer to the first position than the second position or a direction toward the third position is referred to as outside or outer side, and a fourth position closer to the second position than the first position or a direction toward the fourth position is referred to as inside or inner side. The terms up-down direction, left-right direction, and front-rear direction are used assuming that the door mirror 1 is attached to a vehicle. The up-down direction, left-right direction, and front-rear direction are determined with respect to a driver in the vehicle. The vehicle width direction, vertical direction, traveling direction are as indicated by the coordinates in FIGs. 1 to 3 and the like.

The door mirror 1 is fastened to a door panel of a vehicle with a fastener, and provides a driver of the vehicle (not illustrated) with rear visibility (i.e., rear view or back view). The door mirror 1 typically includes a base 11, and a mirror assembly 12 that is manually or electrically rotatable around a rotation axis AX3 with respect to the base 11. The base 11 is fastened to the door panel of the vehicle with a fastener. The base 11 can be composed of a combination of a large number of parts such as a base housing, a shaft holder, and a harness guide.

The mirror assembly 12 is typically rotatably connected to the base 11 via a shaft (not illustrated). When the mirror assembly 12 is in an extended position (see FIGs. 1 and 2), a mirror 35 is positioned to face backward. When the mirror assembly 12 is in a retracted position (not illustrated), the mirror 35 is positioned to face a side surface of the vehicle. The mirror assembly 12 can be electrically controllable between the extended position and the retracted position based on the structure of the shaft. The mirror 35 can be swingable according to the operation of a mirror drive unit (not illustrated). These drive mechanisms are known in this field, and description thereof will be omitted.

The mirror assembly 12 can be assembled from a plurality of housing parts. The housing parts are made of metal or resin, and are formed by die casting or injection molding, but can also be formed by other methods. In some cases, the mirror assembly 12 includes, as housing parts, a mirror housing 3, a lower cover 31 that defines a housing space of the door mirror 1 together with the mirror housing 3, and an upper cover 32 that defines the housing space of the door mirror 1 together with the mirror housing 3 and the lower cover 31. The mirror housing 3 can function as a housing for the mirror 35, and function as a support portion of various parts such as an actuator and a harness. The lower cover 31 and the upper cover 32 can be lighter in weight than the mirror housing 3. The outer shape of these parts can be changed according to various requirements such as design requirements. The lower and upper covers are also simply referred to as housing covers without distinction.

The camera 5 and the lamp 6 are disposed in the housing space of the mirror assembly 12, for example, the housing space defined by the mirror housing 3 and the lower cover 31. The lower cover 31 has an opening 45 through which the camera 5 optically communicates with the external space, and an opening 46 through which the lamp 6 optically communicates with the external space. While the door mirror 1 is attached to the vehicle, the openings 45 and 46 face downward in the vertical direction, that is, face a travel surface (e.g., road surface) on which the vehicle travels. Each of the openings 45 and 46 means a space that is not occupied by any object, but can be provided as an optical opening in which a transparent window material (e.g., glass plate, transparent plastic plate) that allows transmission of a light beam is disposed. The opening 46 for the lamp is larger in size than the opening 45 for the camera, but the present disclosure is not necessarily limited to this.

The camera 5 is used as a monitor that captures an image of an area around the vehicle to support safe driving, but can also be used for other purposes (detection of an object around the vehicle). The lamp 6 is a device that illuminates a road surface and/or the side surface of the vehicle, and can typically be a lighting lamp (e.g., foot lighting lamp) or a projection lamp. The lighting lamp can be turned on in synchronization with the opening of a door of the vehicle or the operation of the camera 5. The projection lamp can be turned on in synchronization with the opening or unlocking of a door of the vehicle or other events. The lighting lamp illuminates a wider area than the projection lamp, and thus can be considered to have lighting characteristics different from those of the projection lamp. Unlike the lighting lamp, the projection lamp may have a convex lens, and thus can be considered to have lighting characteristics different from those of the lighting lamp. Other various types of lamps can be adopted as the lamp 6. The projection lamp can project a logo or a design that is related or unrelated to the manufacturer or type of the vehicle.

As illustrated in FIG. 1, an angle θ1 (acute angle) formed by an optical axis AX5 of the camera 5 and an axis L1 parallel to the rotation axis AX3 of the mirror assembly 12 is larger than an angle θ2 (acute angle) formed by an optical axis AX6 of the lamp 6 and an axis L2 parallel to the rotation axis AX3 of the mirror assembly 12, thus making it possible to acquire an image in an area sufficiently apart from the vehicle. The same applies when the axes L1 and L2 are rephrased as axes parallel to the vertical direction.

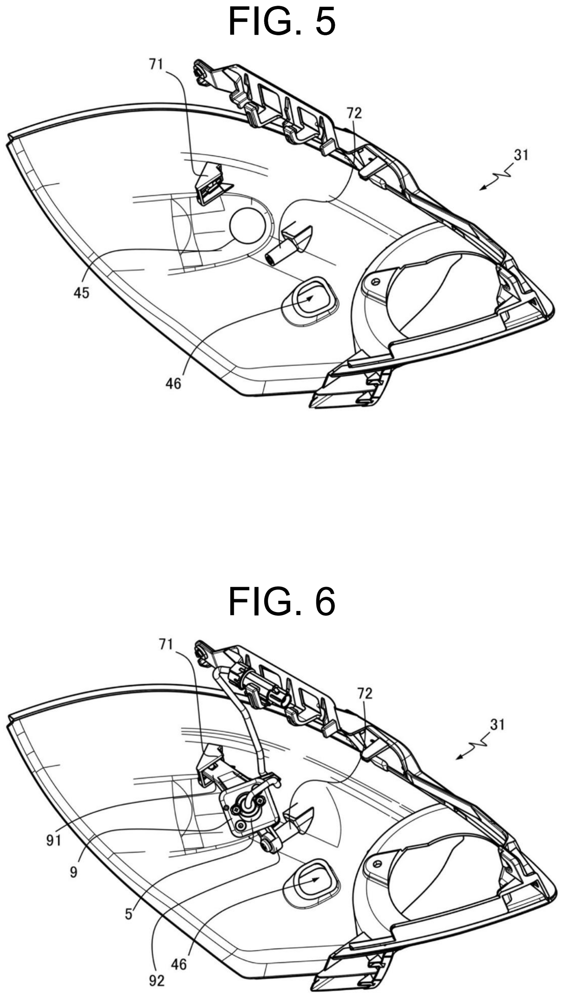

Description will be provided with reference to FIG. 4. The lower cover 31 has a peripheral edge portion 41 that defines the opening 45, and further has a peripheral wall 42 that defines the opening 46. A peripheral wall can be provided to define the opening 45. A peripheral edge can be provided to define the opening 46. The peripheral wall 42 extends toward the inner side of the door mirror 1 (mirror assembly 12), and preferably extends so that the opening 46 is narrowed (see also FIGs. 5 and 6). That is, the width of the opening 46 can be increased toward the outer side of the opening 46 along the optical axis of the lamp 6. Advantageously, the height of the peripheral wall 42 is continuously (see the illustrated example) or intermittently (not illustrated) changed in the circumferential direction of the opening 46. Thus, the shape of the peripheral wall 42 can be optimized for a lamp 6A (described below). Advantageously, the peripheral wall 42 is set to be higher on the outer side in the vehicle width direction than on the inner side in the vehicle width direction. The inner side in the vehicle width direction means a first position closer to a center line of the vehicle that extends in the vehicle traveling direction at a center of the vehicle width or a direction toward the first position, and the outer side in the vehicle width direction means a second position farther from the center line or a direction away from the second position.

As illustrated in FIGs. 4 to 6, the lower cover 31 has a camera attaching portion 7 to which the camera 5 is attached. The camera 5 is attached to the camera attaching portion 7 via a bracket 9 (see FIG. 6). The camera attaching portion 7 is composed of a holding portion 71 that holds a leg portion 91 of the bracket 9, and a boss 72 to which a seat plate 92 of the bracket 9 is screwed. For reference, FIGs. 5 and 6 are perspective views of the lower cover 31 before and after the camera 5 is attached. The camera 5 can be omitted, and the camera attaching portion 7 can also be omitted.

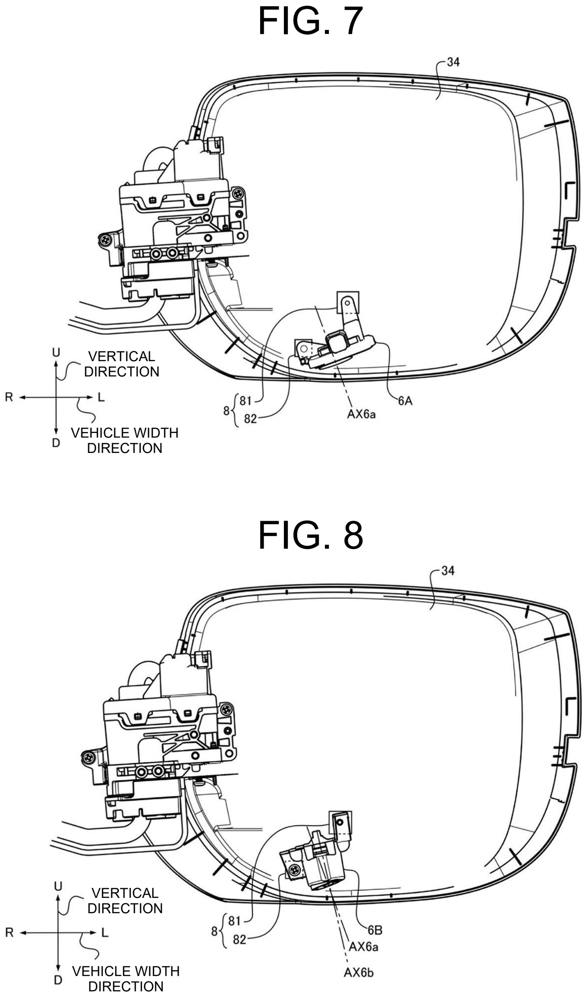

Further description will be provided with reference to FIGs. 7 and 8. FIG. 7 is a front view showing a state in which the lighting lamp 6A (hereinafter may be simply referred to as lamp 6A) is attached to a lamp attaching portion 8 of the mirror housing 3. FIG. 8 is a front view showing a state in which a projection lamp 6B (hereinafter may be simply referred to as lamp 6B) is attached to the lamp attaching portion 8 of the mirror housing 3. The lighting lamp 6A or the projection lamp 6B is selectively adopted according to the type or grade of the vehicle to which the door mirror 1 is attached. When each of the lighting lamp 6A and the projection lamp 6B is adopted, the corresponding one of the lighting lamp 6A and the projection lamp 6B is attached to the lamp attaching portion 8 having the same structure in the mirror housing 3 having the same structure. That is, the common mirror housing 3 can be used regardless of the type of the lamp 6. Thus, it is possible to suppress or avoid an increase in manufacturing cost (e.g., an increase in die cost) and avoid or suppress an increase in cost for the door mirror 1.

The mirror housing 3 is larger in size and/or higher in mechanical strength than the lower cover 31. Thus, when the lamp attaching portion 8 is provided not in the lower cover 31 but in the mirror housing 3, the lamp 6 can be more stably attached and fixed. As a matter of course, the lamp attaching portion 8 can be provided in any part of the door mirror 1, and can be provided in the lower cover 31.

As illustrated in FIGs. 7 and 8, the lamp attaching portion 8 is provided on a front surface 34 of the mirror housing 3. Although the present disclosure should not be limited to this, the lamp attaching portion 8 is composed of two bosses 81 and 82, and is raised forward from the front surface 34 of the mirror housing 3. Each of the bosses has an insertion hole into which a fastener (e.g., a shaft portion of a screw) is inserted. A structure other than the boss can also be adopted. The position and/or structure of the lamp attaching portion 8 is not particularly limited. The lamp attaching portion 8 can be provided in a part that is attached to the mirror housing 3 and is different from the mirror housing 3.

In the case illustrated in FIG. 7, the lighting lamp 6A is directly attached to the lamp attaching portion 8 with a fastener (e.g., individually fastened to the two bosses 81 and 82 with two fasteners). On the other hand, in the case illustrated in FIG. 8, the projection lamp 6B is attached, via a bracket 15, to the lamp attaching portion 8 with a fastener (e.g., individually fastened to the two bosses 81 and 82 with two fasteners). The use of the bracket 15 allows the lamp attaching portion 8 to have the same structure for the lamps 6A and 6B. Advantageously, the lamp 6B is attached to the lamp attaching portion 8 via the bracket 15, and simultaneously, an optimal setting of an optical axis of the lamp 6B is achieved.

The bracket 15 causes an optical axis AX6b of the projection lamp 6B (first lamp) while the projection lamp 6B is attached to the lamp attaching portion 8 to be inclined in a direction different from a direction in which an optical axis AX6a of the lighting lamp 6A (second lamp) is inclined when the lighting lamp 6A is alternatively attached to the lamp attaching portion 8 (see FIG. 8). The intersection of the optical axis AX6a and the optical axis AX6b illustrated in FIG. 8 can be observed, for example, from the front or back while the door mirror 1 is attached to the vehicle. The optical axis AX6b extends from the projection lamp 6B toward an object (e.g., road surface) illuminated by the projection lamp 6B, and the optical axis AX6a of the lighting lamp 6A extends from the lighting lamp 6A toward an object (e.g., road surface) illuminated by the lighting lamp 6A. The angle (acute angle) formed by the optical axes AX6a and AX6b can be 30° or less, 20° or less, 10° or less, or 5° or less.

In an example design method, the lamp attaching portion 8 is designed for attachment of the lighting lamp 6A without a bracket. The bracket 15 is designed for attachment of the projection lamp 6B to the lamp attaching portion 8. In this case, the orientation of the projection lamp 6B while the bracket 15 is attached to the lamp attaching portion 8 can be adjusted based on the orientation of the bracket 15 with respect to the lamp attaching portion 8. Specifically, the orientation of the lamp 6B (the optical axis of the lamp 6B) can be adjusted by adjusting the positions of a fastened portion 27' and a fastened portion 28' with respect to a cylindrical housing 16 of the bracket 15 (described below). The lamp 6B is attached to the lamp attaching portion 8 via the bracket 15, and simultaneously, an optimal setting of the optical axis of the lamp 6B is achieved, thus requiring no additional work for adjustment of the optical axis. In this manner, it is possible to achieve both commonality of the part (housing part in the illustrated example) in which the lamp attaching portion 8 is provided and an optimal setting of the optical axes of the lamps 6A and 6B.

Furthermore, the lighting lamp 6A attached to the lamp attaching portion 8 without a bracket allows the number of parts to be smaller. Note that the bracket can be designed not for the lamp 6B but for the lamp 6A. However, when the lighting lamp 6A and the projection lamp 6B are adopted as alternatively usable lamps, the bracket is advantageously designed for the projection lamp 6B that is expected to be small in quantity. More advantageously, the bracket 15 causes the optical axis AX6b to be more inclined inward in the vehicle width direction than the optical axis AX6a (see FIG. 8). Thus, it is possible to project a logo or a design onto a position closer to the vehicle, providing a higher sense of unity or connection with the vehicle. On the other hand, the lamp 6A can illuminate the road surface at a position farther from the vehicle, providing more effective lighting to an occupant of the vehicle or the camera 5.

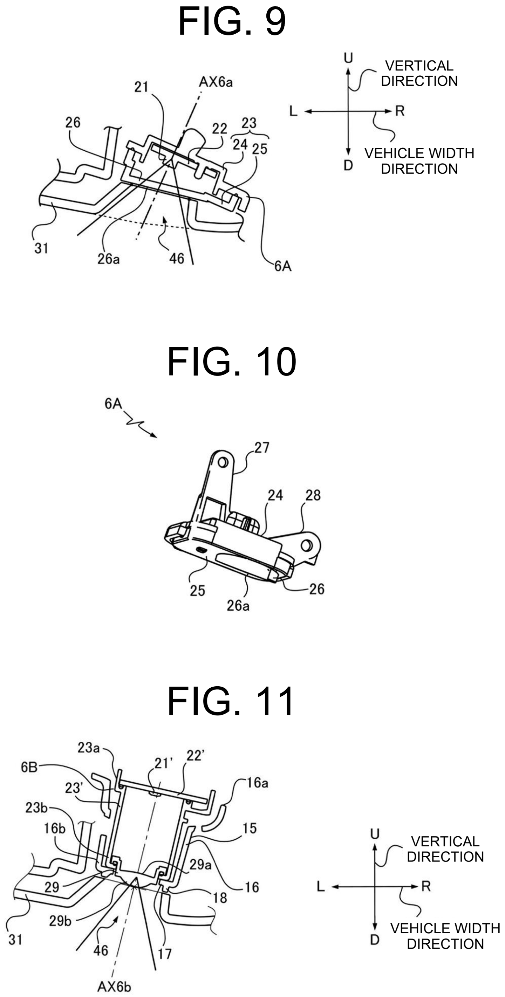

Description will be provided with reference to FIGs. 9 and 10 (also with reference to FIG. 7). The lamp 6A is a lighting device that illuminates a wider area than the lamp 6B, and includes a substrate 22 on which a light source 21 is mounted, and a housing 23 that houses the substrate 22. The light source 21 is a semiconductor light emitting element such as a light emitting diode (LED) or a laser diode (LD), and emits light according to a current supplied via a harness. Not only the light source 21 but also a drive circuit of the light source 21 can be mounted on the substrate 22. The housing 23 includes an inner part 24 and an outer part 25. At least the outer part 25 is composed of a transparent material (e.g., a transparent resin that transmits visible light). The substrate 22 is fixed to the inner part 24. The outer part 25 is combined with the inner part 24, and a lens portion 26 of the outer part 25 is aligned with an optical axis of the light source 21. The lens portion 26, for example, has an inclined surface 26a that refracts a light flux emitted from the light source 21. The inclined surface 26a is visually recognizable from outside through the opening 46. The inclined surface 26a is offset upward by the height of the peripheral wall 42 from the outer surface of the lower cover 31. The optical axis AX6a of the lamp 6A coincides with the optical axis of the light source 21 or the lens portion 26, and can be understood to additionally or alternatively correspond to the maximum luminance point in the luminance distribution of the emitted light flux.

The outer part 25 (e.g., lens portion 26) is provided to close the opening 46 from the inside of the mirror assembly 12. The outer surface of the outer part 25 (the inclined surface 26a of the lens portion 26) is adjacent to a top portion or top surface of the peripheral wall 42 (may be referred to as an inner end of the peripheral wall) that defines the opening 46 of the lower cover 31, and is preferably adjacent to the top portion or top surface of the peripheral wall 42 with a slight gap or in contact with the top portion or top surface of the peripheral wall 42 without a gap. Thus, it is possible to suppress generation of wind noise while the vehicle is traveling.

Fastened portions 27 and 28 each of which has a flat plate shape and extends away from the opening 46 are integrally provided in the housing 23 of the lamp 6A. Thus, it is possible to attach the lamp 6A to the lamp attaching portion 8 without a bracket. The housing 23 of the lamp 6A can be considered to also serve as a bracket. A dedicated bracket is not used for the lamp 6A, thus allowing the number of parts to be smaller and promoting lower cost. For this purpose, the lamp 6A can be a lamp that is lower in cost than the lamp 6B and does not have a lens separate from the housing unlike the lamp 6B.

The fastened portion 27 extends upward from the inner part 24 (the surface of the inner part 24 opposite to the surface on which the light source 21 is installed). The fastened portion 28 is located on the inner side of the fastened portion 27 in the vehicle width direction, and extends obliquely upward and rightward toward the inner side in the vehicle width direction. Each of the fastened portions 27 and 28 has a hole through which a shaft portion of a fastener (e.g., a shaft portion of a screw or bolt) is inserted, and a seat surface that is located around the hole and on which a head portion of the fastener (head portion of the screw or bolt) is seated. The number, position, and shape of fastened portions are not limited at all, and can be arbitrarily changed.

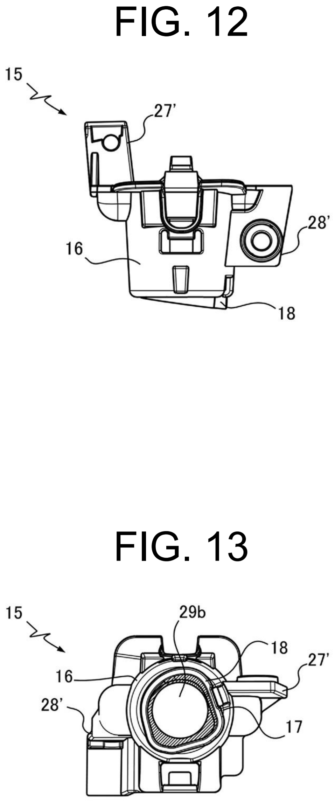

Description will be provided with reference to FIGs. 11 to 13 (also with reference to FIG. 8). The lamp 6B is a projection device that projects a predetermined design or logo. The lamp 6B includes a substrate 22' on which a light source 21' is mounted, a housing 23', and at least one lens 29 that is supported by the housing 23' and through which light emitted from the light source 21' is transmitted. A light shielding plate having a light transmissive pattern corresponding to a logo or design to form a bright image or a dark image of the logo or design can be incorporated into the housing 23'. Other configurations can also be adopted for this purpose.

The housing 23' is a cylindrical part, and has an inner end portion (upper end portion in the illustrated example) 23a and an outer end portion (lower end portion in the illustrated example) 23b. The inner end portion 23a is configured to receive the substrate 22'. The outer end portion 23b is shaped to hold the lens 29. The lens 29 has a convex lens portion (lens surface) 29a that is located on the inner side of the lens 29, and a convex lens portion (lens surface) 29b that is located on the outer side of the lens 29 and has higher optical power. The lens portion 29b is visually recognizable from outside through the opening 46, and advantageously, the entire lens portion 29b is visually recognizable. This may be a result of optimization of the opening 46 not for the lens 29 but for the lens portion 26 of the lamp 6A. The housing 23' does not have a fastened portion for attachment of the lamp 6B to the lamp attaching portion 8.

The bracket 15 includes the cylindrical housing 16 that receives the lamp 6B, and the fastened portions 27' and 28'. The fastened portion 27' extends upward from the cylindrical housing 16. The fastened portion 28' is located on the inner side of the fastened portion 27' in the vehicle width direction, and in short, is located on and connected to the inner side of the cylindrical housing 16 in the vehicle width direction. Each of the fastened portions 27' and 28' has a hole through which a shaft portion of a fastener (e.g., a shaft portion of a screw or bolt) is inserted, and a seat surface that is located around the hole and on which a head portion of the fastener (head portion of the screw or bolt) is seated. The number, position, and shape of fastened portions are not limited at all, and can be arbitrarily changed.

The cylindrical housing 16 has an inner end portion (upper end portion in the illustrated example) 16a having an opening, and an outer end portion (lower end portion in the illustrated example) 16b on the side opposite to the inner end portion 16a. The lamp 6B can be inserted into the bracket 15 through the opening of the inner end portion 16a of the cylindrical housing 16. The outer end portion 16b of the bracket 15 has a flange 17 that extends inward in the radial direction with respect to the optical axis AX6b. The flange 17 can determine the position at which the lamp 6B inserted into the bracket 15 is stopped (the outer end portion 23b can be brought into contact with an inner surface of the flange 17). In order to connect the lamp 6B to the bracket 15, it is possible to adopt an arbitrary method such as press fitting, fitting, adhesion, or welding. In this sense, the bracket 15 has an arbitrary specific shape.

The bracket 15 has at least one closing rib 18 that is located around the opening 46 and protrudes toward the lower cover 31. Preferably, the closing rib 18 protrudes in the flange 17 of the bracket 15. Optionally, the closing rib 18 continuously extends in the circumferential direction of the opening 46, that is, has an annular shape. In the illustrated example, the closing rib 18 protrudes toward the peripheral wall 42 that defines the opening 46. When no peripheral wall is provided, the closing rib 18 protrudes toward the peripheral edge that defines the opening 46. Thus, it is possible to close a gap between the bracket 15 and the lower cover 31 that can be generated when the bracket 15 does not have the closing rib 18.

When the bracket 15 does not have the closing rib 18, a gap may be generated between the bracket 15 and the lower cover 31, leading to generation of wind noise while the vehicle is traveling. However, when the bracket 15 has the closing rib 18, it is possible to avoid or suppress the problem. The gap is more likely to be generated when the bracket 15 has a reasonable shape while an optimal orientation of the lamp 6B, that is, the optical axis of the lamp 6B, is ensured.

The closing rib 18 can have a height that is continuously or intermittently changed in the circumferential direction of the opening 46 (in other words, can have a height that is continuously or intermittently changed around the optical axis AX6b of the lens 29). When the height of the closing rib 18 is changed in the circumferential direction of the opening 46 as described above, it is possible to successfully achieve both the optimization of the optical axis of the lamp 6B and the closure of the space. In the relationship between the lighting lamp 6A and the projection lamp 6B, the height of the closing rib 18 is advantageously set to be higher on the inner side in the vehicle width direction than on the outer side in the vehicle width direction.

The change in height of the closing rib 18 can be complementary to the change in height of the peripheral wall 42. Thus, it is possible to promote the effect of reducing wind noise for the lamp 6B while optimally shaping the peripheral wall 42 for the lamp 6A. The cross-sectional shape of the closing rib 18 on a plane perpendicular to the direction in which the closing rib 18 extends may not necessarily be a rectangular shape or a chamfered rectangular shape, and may be a triangular shape or other shapes. A top surface of the closing rib 18 (outermost surface of the closing rib in the inside-outside direction of the mirror assembly 12) may not necessarily be a flat inclined surface.

The closing rib 18 is provided on the outer periphery of the lens 29 (in particular, the lens portion 29b). The closing rib 18 promotes protection of the lens 29. Additionally or alternatively, the closing rib 18 can be lower in height than the lens 29. In that case, it is possible to avoid or suppress excessively inward positioning of the lens 29.

The functions of the lamps 6A and 6B will be additionally described. A light flux emitted from the light source 21 of the lamp 6A propagates in the internal space of the housing 23, is subjected to an optical effect (e.g., refraction) in the lens portion 26 of the outer part 25, is transmitted through the opening 46 as divergent light, propagates in the external space of the door mirror 1, and finally reaches an object (e.g., road surface) illuminated by the light flux. The light flux is then reflected from the road surface, and propagates toward a human eye or the camera.

A light flux emitted from the light source 21' of the lamp 6B is transmitted through the light transmissive pattern of the light shielding plate and is patterned, is subjected to a convex lens effect in the lens 29, is transmitted through the opening 46 as convergent light, propagates in the external space of the door mirror 1, and finally reaches an object (e.g., road surface) illuminated by the light flux. The light flux is then reflected from the road surface, and propagates toward a human eye. The light flux is then reflected from the road surface, and propagates toward a human eye. Although the divergence angle of the light flux may be reduced by the convex lens effect, the light flux can propagate not as convergent light but as divergent light.

A method of attaching the lamps 6A and 6B to the lamp attaching portion 8 is clear from the above description. Needless to say, the fastened portions 27 and 28 of the housing 23 of the lamp 6A are aligned with the bosses 81 and 82, and are fastened with fasteners. The lamp 6B is first housed in the bracket 15 to obtain a unit of the lamp 6B and the bracket 15. Then, the fastened portions 27' and 28' of the bracket 15 are aligned with the bosses 81 and 82, and are fastened with fasteners. When the lower cover 31 is attached to the mirror housing 3, the opening 46 is properly aligned with the lamps 6A and 6B.

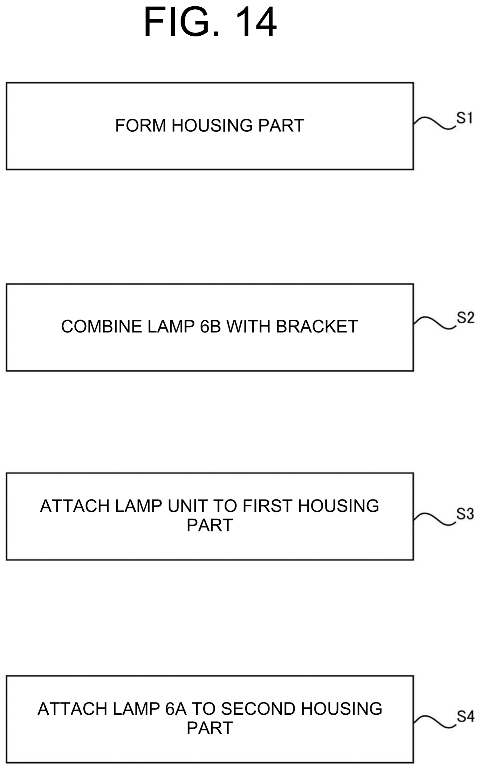

A method of manufacturing a door mirror for a vehicle will be described with reference to FIG. 14. The manufacturing method includes continuously forming, using a predetermined die device, a group of housing parts each of which has a lamp attaching portion (S1). Examples of the housing parts include the mirror housing 3 described above, but the present disclosure is not limited to this. Die casting or injection molding can be used. The housing parts have a complicated structure. Thus, the die device also has a complicated configuration and is very expensive.

The manufacturing method further includes combining the lamp 6B (first lamp) with the bracket 15 (S2), thereby assembling a lamp unit. The lamp 6B is inserted into the cylindrical housing 16 of the bracket 15 to combine the lamp 6B with the bracket 15 as a single unit. In order to combine the lamp 6B with the bracket 15 by fitting, a locking portion and a locked portion can be individually provided in each of the lamp 6B and the bracket 15. Other methods such as adhesion or welding can also be adopted. The steps S1 and S2 can be performed in reverse order.

The manufacturing method further includes attaching the bracket 15 of the lamp unit to the lamp attaching portion of a first housing part included in the group of housing parts continuously formed (S3). Thus, a semifinished door mirror in which the lamp 6B is incorporated is obtained.

The manufacturing method further includes attaching the lamp 6A (second lamp) to the lamp attaching portion of a second housing part included in the group of housing parts continuously formed (S4). Thus, a semifinished door mirror in which the lamp 6A is incorporated is obtained. The second housing part described above is obtained by S1 as with the first housing part.

The semifinished door mirror obtained by S3 and S4 as described above is subjected to an additional step such as assembly of other parts, and finally becomes the door mirror 1 as a product. This point is known in the field, and description thereof will be omitted. In this manner, a common housing part (e.g., mirror housing 3) can be used for different types of lamps 6. Thus, it is possible to suppress or avoid an increase in die cost and avoid or suppress an increase in cost for the door mirror 1.

Optionally, the manufacturing method can further include continuously forming, using a predetermined die device, a housing cover (e.g., lower cover 31) having the opening 46 provided as a common opening for the lamps 6A and 6B. This feature relates to a mode in which the lamp attaching portion is provided in a housing part other than the mirror housing 3.

One or more features of the bracket 15 described above are also applicable to the manufacturing method. For example, the bracket 15 causes the optical axis of the lamp 6B to be inclined in a direction different from the direction in which the optical axis of the lamp 6A is inclined. The optical axis of the lamp 6B can be automatically set by attaching the bracket 15 to the lamp attaching portion. The bracket 15 having the closing rib 18 achieves the effect of reducing wind noise. Any further description is redundant for those skilled in the art, and thus is omitted.

### DESCRIPTION OF REFERENCE NUMERALS

1: Door mirror
3: Mirror housing
6: Lamp
6A: Lighting lamp
6B: Projection lamp
8: Lamp attaching portion
15: Bracket
16: Cylindrical housing
16a: Inner end portion
16b: Outer end portion
17: Flange
18: Closing rib
21: Light source
21': Light source
23: Housing
23': Housing
23a: Inner end portion
23b: Outer end portion
26: Lens portion
29: Lens
29b: Lens portion
35: Mirror
42: Peripheral wall
45: Opening
46: Opening
60: Lamp

## Claims

1. A door mirror (1) for a vehicle, the door mirror (1) comprising:
a lamp (6) attaching portion;
a first lamp (6B) that is attached to the lamp (6) attaching portion via a bracket; and
a housing cover that has an optical opening through which light emitted from the first lamp (6B) is transmitted, wherein
a second lamp (6A) that is different in lighting characteristics from the first lamp (6B) is attachable to the lamp (6) attaching portion as an alternative to the first lamp (6B), and
the bracket causes an optical axis of the first lamp (6B) while the first lamp (6B) is attached to the lamp (6) attaching portion to be inclined in a direction different from a direction in which an optical axis of the second lamp (6A) is inclined when the second lamp (6A) is alternatively attached to the lamp (6) attaching portion.

2. The door mirror (1) according to claim 1, wherein
the housing cover has a peripheral edge or a peripheral wall that defines an opening as the optical opening, and
the bracket has at least one closing rib that protrudes toward the peripheral edge or the peripheral wall.

3. The door mirror (1) according to claim 2, wherein
the at least one closing rib has a height that is continuously or intermittently changed in a circumferential direction of the opening.

4. The door mirror (1) according to claim 3, wherein
the height of the at least one closing rib is set to be higher on an inner side in a vehicle width direction than on an outer side in the vehicle width direction.

5. The door mirror (1) according to claim 2, wherein
the first lamp (6B) includes a light source, a housing, and at least one lens that is supported by the housing and through which light emitted from the light source is transmitted, and
the at least one closing rib is provided on an outer periphery of the at least one lens.

6. The door mirror (1) according to claim 5, wherein
the at least one closing rib extends along an entire circumference around an optical axis of the at least one lens.

7. The door mirror (1) according to claim 5, wherein
an outer convex lens portion of the at least one lens is visually recognizable from outside through the opening.

8. The door mirror (1) according to claim 2 in which the housing cover has the peripheral wall, wherein
the peripheral wall has a height that is continuously or intermittently changed in a circumferential direction of the opening, and
the at least one closing rib has a height that is changed in a manner complementary to a change in height of the peripheral wall.

9. The door mirror (1) according to claim 1, wherein
the bracket (15) includes a cylindrical housing (16) that receives the first lamp (6B),
the cylindrical housing (16) has an inner end portion (16a) having an opening and an inner end portion (16b) on a side opposite to the inner end portion (16a), and
the inner end portion (16b) has at least one flange having the at least one closing rib.

10. The door mirror (1) according to claim 1, wherein
while the door mirror (1) is attached to a vehicle, the bracket (15) causes an optical axis of the first lamp (6B) while the first lamp (6B) is attached to the lamp attaching portion (8) to be more inclined inward in a vehicle width direction than an optical axis of the second lamp (6A) when the second lamp (6A) is alternatively attached to the lamp attaching portion (8).

11. The door mirror (1) according to claim 1, wherein
the first lamp (6B) is a projection device that projects a predetermined design or logo.

12. The door mirror (1) according to claim 1, wherein
the lamp attaching portion (8) is provided in a mirror housing that defines a housing space together with the housing cover.

13. A door mirror (1) for a vehicle, the door mirror (1) comprising:
a lamp attaching portion (8);
a first lamp (6B) that is attached to the lamp attaching portion (8) via a bracket (15); and
a housing cover that has an opening through which light emitted from the first lamp (6B) is transmitted, wherein
the bracket (15) has at least one closing rib that is located around the opening and protrudes toward the housing cover, and
the at least one closing rib has a height that is changed in a circumferential direction of the opening.

14. The door mirror (1) according to claim 13, wherein
the housing cover has a peripheral wall that is formed to define the opening,
the peripheral wall has a height that is continuously or intermittently changed in a circumferential direction of the opening, and
a change in height of the closing rib is complementary to a change in height of the peripheral wall.

15. The door mirror (1) according to claim 13, wherein
the height of the at least one closing rib is set to be higher on an inner side in a vehicle width direction than on an outer side in the vehicle width direction.

16. A method of manufacturing a door mirror (1) for a vehicle, the method comprising:
continuously forming, using a predetermined die device, a group of housing parts each of which has a lamp attaching portion (8);
attaching a first lamp (6B) to a bracket (15) to assemble a lamp unit;
attaching the bracket (15) of the lamp unit to the lamp attaching portion (8) of a first housing part included in the group of housing parts continuously formed; and
attaching a second lamp (6A) to the lamp attaching portion (8) of a second housing part included in the group of housing parts continuously formed.

17. The method of manufacturing a door mirror for a vehicle according to claim 16, wherein
the bracket (15) causes an optical axis of the first lamp (6B) while the first lamp (6B) is attached to the lamp attaching portion (8) via the bracket (15) to be inclined in a direction different from a direction in which an optical axis of the second lamp (6A) is inclined when the second lamp (6A) is alternatively attached to the lamp attaching portion (8).

18. The method of manufacturing a door mirror for a vehicle according to claim 16, the method further comprising
continuously forming, using a predetermined die device, a group of housing covers each of which has a common opening for the first lamp (6B) and the second lamp (6A).
